# EUROPEAN PATENT SPECIFICATION

(11) **EP 3 031 574 B1**
(45) Date of publication and mention of the grant of the patent: **31.05.2017**
(21) Application number: 15197447.4
(22) Date of filing: 02.12.2015
(51) Int. Cl.: B23Q 11/08

(54) **PROTECTIVE DEVICE**
SCHUTZVORRICHTUNG
DISPOSITIF DE PROTECTION

(30) Priority: 12.12.2014 IT BO20140698
(43) Date of publication of application: 15.06.2016
(73) Proprietor: P.E.I. Protezioni Elaborazioni Industriali S.r.l., 40012 Calderara di Reno (Bologna) (IT)
(72) Inventor: MACCAFERRI, Fabio, 40010 Sala Bolognese (Bologna) (IT); BENEDETTI, Michele, 40132 Bologna (IT)
(74) Representative: Milli, Simone

(56) References cited:
- EP-A2- 0 474 056
- DE-A1- 19 538 636

## Description

This invention relates to a protective device, in particular for machine tools. A strongly felt need in the technical sector in question is that of providing a protective device which is particularly simple and compact and which, advantageously, allows the operators to be protected in a highly effective manner, isolating them from the operating zone of the machine.

More specifically, a need particularly felt by the users is that of having a protection which is particularly compact even in the configuration of least extension, that is, when the protection device has a minimum length. DE-19538636-A discloses a protective device according to the preamble of claim 1. The aim of the invention is to satisfy the above-mentioned need by providing a protective device which can be applied, preferably but without limiting the scope of the invention, to a machine tool.

According to the invention, this aim is achieved by a protection device according to this invention comprising the technical features described in one or more of the appended claims.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 is a schematic view of the protective device according to this invention in an extended configuration;
- Figure 2 is a schematic view of the protective device according to this invention in an intermediate configuration;
- Figure 3 is a schematic view of the protective device according to this invention in a compressed configuration;

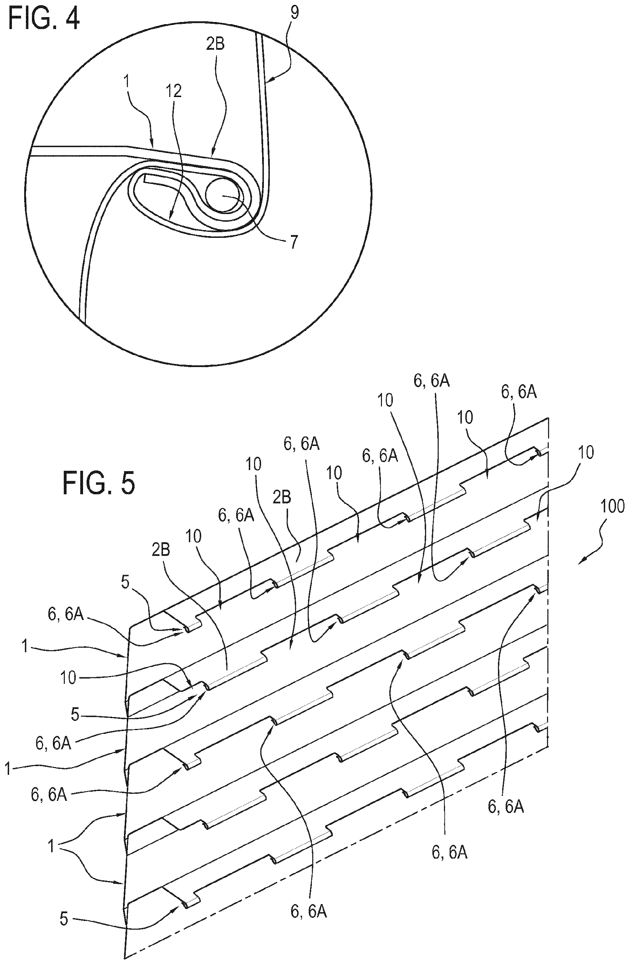

- Figure 4 is a schematic perspective view of a detail K of the preceding drawings;
- Figure 5 is an enlarged perspective view of details of the protective device shown in the preceding drawings.

With reference to the accompanying drawings, the numeral 100 denotes a protective device, which can be advantageously used for protecting operating areas (for example of machine tools).

The device 100 comprises a plurality of slats 1, having a front wall 2A and an upper wall 2B.

The slats are positioned to form a vertical succession, that is, positioned vertically one after another.

The upper wall 2B of a slat 1 is connected (at the top) to the front wall 2A. Preferably, the front wall 2A has, below, an inclined portion 2C.

The lower inclined portion 2C of a slat 1 is designed to make contact with the front wall 2A of a subsequent and lower slat 1 (that is, located below).

Preferably, the front wall 2A extends mainly on a vertical plane. Preferably, according to an embodiment (illustrated in the accompanying drawings), the upper wall 2B is located at a right angle relative to the front wall 2A.

Alternatively, according to another embodiment (not illustrated), the upper wall 2B is, located at an angle (different from 90°) relative to the front wall 2A.

The slats 1, in use, are positioned in contact with each other (that is, in a such a way that an inner portion of the front wall 2A of one of them is in contact with an outer portion of the front wall 2A of another slat 1) to define overall a surface 3 of vertical closing (continuous).

The surface 3 of vertical closing allows an operating region (in which the working element of the machine is positioned) to be isolated from a non-operating region (in which the operator and/or other machine elements are positioned).

More specifically, the inclined portion 2C of the front wall 2A of a slat 1 is in contact from the outer side with the front wall 2A - from the inner side - of another slat 1 (positioned below).

It should be noted that the inner side is the side which faces towards the work area, whilst the outer side is the opposite side.

With reference to the slats 1, it should be noted that they are substantially rigid, that is, not deformable.

Preferably, the slats 1 are made from a metal material.

Each slat 1 has - at an end - a coupling edge 5 defining at least one seat 6 shaped like a "C" and open towards the closing surface 3.

More specifically, the upper wall 2B has the coupling edge 5.

The seat 6 therefore defines to all intents and purposes a housing channel (substantially cylindrical in shape).

More specifically, the upper wall 2B has the coupling edge 5 from the side distal relative to the closing surface 3, that is, from the side opposite the front wall 2A.

It should be noted that, in the embodiment illustrated, the upper wall 2B is positioned in use substantially horizontally.

It should be noted, in particular, that the closing surface 3 is defined by the set of front walls 2A of the various slats 1.

The device 100 also comprises a plurality of pins 7, each designed to engage at the coupling edge 5 inside at least one open seat 6.

In other words, with reference to a pin 7, the pin 7 is inserted inside of all the seats 6 of a slat 1.

It should be noted, in particular, that there is a pin 7 for each coupling edge 5, that is, for each slat 1.

The device 100 also comprises a closing sheet 9, coupled to the pins 7 for being inserted inside the above-mentioned at least one seat 6 of the coupling edges 5.

This sheet 9 is a flexible type sheet.

Preferably, the sheet 9 is shaped like a concertina, that is, it defines a series of folds (according to a profile of peaks and troughs).

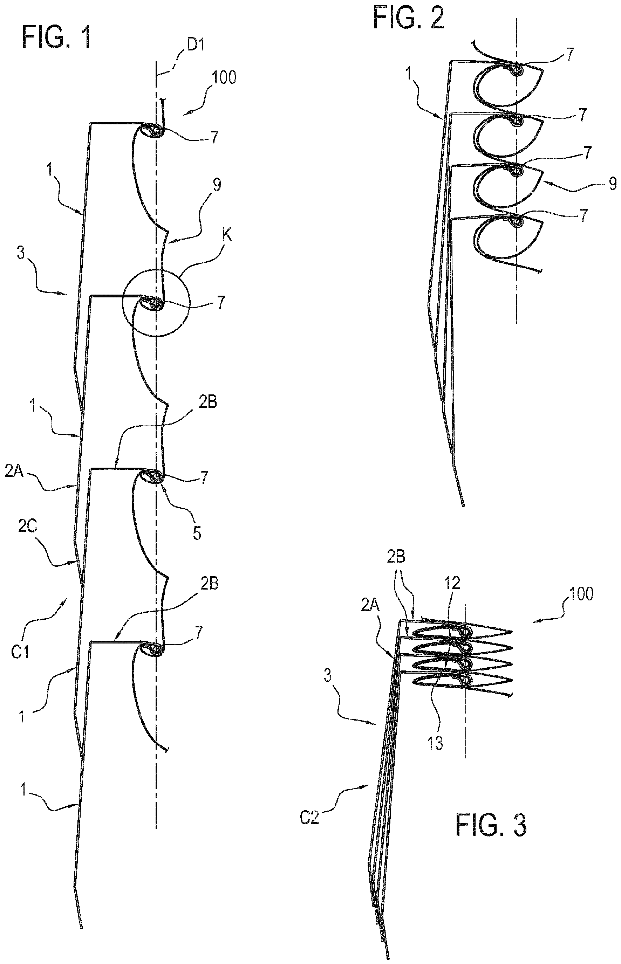

It should be noted that the slats 1 are relatively mobile along a direction of movement D1 between a configuration of maximum extension C1 (Figure 1), wherein the closing surface 3 is maximum, and a configuration of minimum extension C2 (Figure 3), wherein the closing surface 3 defined is minimum.

It should be noted that the movement of the slats 1 also causes the movement of the pins 7 and the sheet 9, since the pins 7 and the sheet 9 are inserted inside the seats 6, that is, during use they are integral with the slats 1.

The movement of the slats 1 along the direction of movement D1 means that the front wall 2A of one slat modifies the relative position with respect to the front wall 2A of the other slat 1, consequently modifying the total length defined by the slats 1 along the direction of movement D1. According to the invention, the slats 1 each have, at the coupling edge 5, a series of protrusions 6A defining seat 6 open in the form of a "C".

The protrusions 6A define recesses 10 between each other.

It should also be noted that a recess 10 is defined between one seat 6 and the next or between an end edge and a seat 6.

It should also be noted that, with reference to a pair of adjacent slats 1 (that is, positioned one above the other), one of the two slats 1 has (according to a plan view), at the coupling edge 5, the open seats 6 at the recesses 10 of the other slat 1, and the recesses 10 at the open seats 6 of the other slat 1, so that in the configuration C2 of minimum extension the open seats 6 of a slat insert (at least partly) in the recesses 10 of the other slat 1.

For this reason, with reference to the seats 6 of slats adjacent and successive to each other, it should be noted that they are positioned offset in plan, in such a way as to co-penetrate in the configuration C2 of minimum extension (the seats 6 of one slat 1 are inserted in the recesses 10 the other slat 1).

According to another aspect, the closing sheet 9 is coupled to the pins 7 to define, in the configuration of minimum extension C2, along the direction of movement D1 of the slats 1, two overlapping portions 12, 13 of the sheet 9 at a zone below an open seat 6 of a first slat 1 (upper) and above the upper wall 2B of a second slat 1, with the first slat 1 (lower).

It should be noted that, according to the invention, one between the first and the last of the slats 1 is fixed, in use, to a movable machine element (not illustrated) whilst the other between the first and the last of the slats 1 is fixed, in use, to a frame (or static element) of the machine.

It should be noted that the surface 3 of the slats 1 is facing, in use, towards the operating zone of the machine (towards the inner side) whilst the surface - opposite - of the sheet 9 is facing towards the outside, towards the user or towards other machine elements.

The sheet 9 has a plurality of folds, that is, it has along the direction D1 of movement of the slats 1 a plurality of crests, defining respective peaks and troughs.

It should be noted that each pin 7 is inserted inside all the open seats 6 relative to the coupling edge 5 of a slat 1, passing also through the recesses 10.

Preferably, the pin 7 is positioned at a trough of the sheet 9, before being inserted inside open seats 6 relative to the coupling edge 5 of a slat 1.

According to another aspect, the protrusions 6A have locally deformed regions to allow the pin 7 and the sheet 9 to be retained inside the seats 6. Advantageously, the protective device 1 according to this invention makes it possible to protect the operators in a particularly effective manner, considerably reducing the relative dimensions in the configuration of minimum dimensions.

Advantageously, the configuration of the slats 1 with offset seats 6 (in plan) makes it possible to obtain large closing surfaces 3 in the configuration of minimum dimensions, and at the same time obtain a large operating surface in the configuration of maximum dimensions.

## Claims

1. A protective device, comprising:
- a plurality of slats (1), each having a front wall (2A) and an upper wall (2B), positioned in such a way that the front walls (2A) are in contact, in succession, to define overall a continuous surface (3) of vertical closing, each upper wall (2B) having at an end a coupling edge (5) defining at least one seat (6) which is C-shaped and open towards the closing surface (3),
- a plurality of pins (7), each designed to engage at the coupling edge (5) inside at least one open seat (6) of a slat (1);
- a closing sheet (9), coupled to the pins (7) for being inserted inside the above-mentioned at least one seat (6) of the coupling edges (5),
the slats (1) being relatively mobile along a direction of movement (D1) between a configuration of maximum extension (C1), wherein the closing surface (3) defined is maximum, and a configuration of minimum extension (C2), wherein the closing surface (3) defined is minimum, each of the slats (1) having, at the coupling edge (5), a series of protrusions (6A) each defining one of the above-mentioned open seats (6), the device being **characterised in that** the protrusions (6A) are offset from each other in plan to define recesses (10) between each of the protrusions (6A) and one of two slats (1), consecutive to each other, has, at the coupling edge (5), the open seats (6) at the recesses (10) of the other slat, and the recesses (10) at the open seats (6) of the other slat (1), in such a way that in the configuration of minimum extension (C2) the open seats (6) of a slat insert at least partially in the recesses (10) of the other slat (1).

2. The device according to the preceding claim, wherein the closing sheet (9) is coupled to the pins (7) to define, in the configuration of minimum extension (C2), along the direction of movement (D1) of the slats (1), a flap defined by two overlapping portions (12, 13) of the sheet (9) at a zone below an open seat (6) of a first slat (1) and above the upper wall 2B of a second slat (1), with the first slat (1) positioned above the second slat (1).

3. The device according to any one of the preceding claims, wherein the sheet (9) has a plurality of fold lines defining peaks and troughs.

4. The device according to any one of the preceding claims, wherein the protrusions (6A) have locally deformed regions to allow the pin (7) and the sheet (9) to be retained inside the seat (6).

5. The device according to any one of the preceding claims, wherein the slats (1) are rigid slats.

6. The device according to any one of the preceding claims, wherein the front wall (2A) of each slat (1) has a inclined lower portion (2C), designed to make contact with the front wall (2A) of a subsequent and lower slat (1).

## Patentansprüche

1. Schutzvorrichtung, umfassend:
- eine Vielzahl an Latten (1), von denen eine jede eine frontseitige Wand (2A) und eine oberseitige Wand (2B) aufweist, so positioniert, dass die frontseitigen Wände (2A) nacheinander in Kontakt miteinander sind, um insgesamt eine durchgehende Oberfläche (3) zum vertikalen Abschluss zu definieren, wobei eine jede oberseitige Wand (2B) an einem Ende eine Kupplungskante (5) aufweist, die mindestens eine Aufnahme (6) definiert, die C-förmig und zur Verschlussoberfläche (3) hin offen ist;
- eine Vielzahl an Stiften (7), die jeweils ausgestaltet sind, um an der Kupplungskante (5) in mindestens eine offene Aufnahme (6) einer Latte (1) einzugreifen;
- eine Verschlussplatte (9), die mit den Stiften (7) gekuppelt ist, um in die oben genannte mindestens eine Aufnahme (6) der Kupplungskanten (5) eingesetzt zu werden,
wobei die Latten (1) relativ entlang einer Bewegungsrichtung (D1) mobil sind, zwischen einer Konfiguration der maximalen Ausdehnung (C1), in der die definierte Verschlussoberfläche (3) maximal ist, und einer Konfiguration der minimalen Ausdehnung (C2), in der die definierte Verschlussoberfläche (3) minimal ist,
wobei eine jede der Latten (1) an der Kupplungskante (5) eine Reihe von Vorsprüngen (6A) aufweist, die jeweils eine der oben genannten Aufnahmen (6) definieren, wobei die Vorrichtung **dadurch gekennzeichnet ist, dass** die Vorsprünge (6A) in der Ebene voneinander versetzt angeordnet sind, um Vertiefungen (10) zwischen einem jeden der Vorsprünge (6A) zu definieren, und eine der zwei Latten (1) jeweils nacheinander an der Kupplungskante (5) die offenen Aufnahmen (6) an den Vertiefungen (10) der anderen Latte und die Vertiefungen (10) an den offenen Aufnahmen (6) der anderen Latte (1) aufweist, sodass sich die offenen Aufnahmen (6) einer Latte in der Konfiguration der minimalen Ausdehnung (C2) mindestens teilweise in die Vertiefungen (10) der anderen Latte (1) einfügen.

2. Vorrichtung nach dem vorhergehenden Anspruch, wobei die Verschlussplatte (9) mit den Stiften (7) gekuppelt ist, um in der Konfiguration der minimalen Ausdehnung (C2) entlang der Bewegungsrichtung (D1) der Latten (1) eine Klappe zu definieren, definiert durch zwei sich überlappende Abschnitte (12, 13) der Platte (9) an einer Zone unterhalb einer offenen Aufnahme (6) einer ersten Latte (1) und oberhalb der oberseitigen Wand (2B) einer zweiten Latte (1), wobei die erste Latte (1) über der zweiten Latte (1) positioniert ist.

3. Vorrichtung nach einem der vorhergehenden Ansprüche, wobei die Platte (9) eine Vielzahl an Faltlinien aufweist, die Spitzen und Mulden definieren.

4. Vorrichtung nach einem der vorhergehenden Ansprüche, wobei die Vorsprünge (6A) lokal verformte Regionen aufweisen, damit der Stift (7) und die Platte (9) in der Aufnahme (6) gehalten werden können.

5. Vorrichtung nach einem der vorhergehenden Ansprüche, wobei die Latten (1) steife Latten sind.

6. Vorrichtung nach einem der vorhergehenden Ansprüche, wobei die frontseitige Wand (2A) einer jeden Latte (1) einen geneigten unteren Abschnitt (2C) aufweist, der ausgestaltet ist, um den Kontakt mit der frontseitigen Wand (2A) einer nachfolgenden und unteren Latte (1) herzustellen.

## Revendications

1. Dispositif de protection comprenant:
- une pluralité de lamelles (1) comportant chacune une paroi antérieure (2A) et une paroi supérieure (2B) positionnées de manière à ce que les parois antérieures (2A) soient en contact, les unes à la suite des autres, pour définir globalement une surface continue (3) de fermeture verticale, chaque paroi supérieure (2B) comportant à une extrémité un bord d'accouplement (5) définissant au moins un siège (6) étant en forme de « C » et ouvert vers la surface de fermeture (3),
- une pluralité de chevilles (7), chacune conçue pour se mettre en prise en correspondance du bord d'accouplement (5) à l'intérieur au moins d'un siège ouvert (6) d'une lamelle (1);
- une tôle de fermeture (9), accouplée aux chevilles (7), pour être insérée à l'intérieur de l'au moins un siège (6) susmentionné des bords d'accouplement (5), les lamelles (1) étant relativement mobiles le long d'une direction de mouvement (D1) entre une configuration d'extension maximum (C1), dans laquelle la surface de fermeture (3) définie est maximum, et une configuration d'extension minimum (C2), dans laquelle la surface de fermeture (3) définie est minimum, chacune des lamelles (1) comportant, en correspondance du bord d'accouplement (5), une série de saillies (6A) définissant chacune un des sièges ouverts (6) susmentionnés, le dispositif étant **caractérisé en ce que** les saillies (6A) sont décalées les unes par rapport aux autres en plan pour définir des renfoncements (10) entre chacune des saillies (6A) et l'une des deux lamelles (1), consécutives l'une à l'autre, comporte, en correspondance du bord d'accouplement (5), les sièges ouverts (6) en correspondance des renfoncements (10) de l'autre lamelle, et les renfoncements (10) en correspondance des sièges ouverts (6) de l'autre lamelle (1), de manière à ce que dans la configuration d'extension minimum (C2), les sièges ouverts (6) d'une lamelle s'insèrent au moins partiellement dans les renfoncements (10) de l'autre lamelle (1).

2. Dispositif selon la revendication précédente, dans lequel la tôle de fermeture (9) est accouplée aux chevilles (7) pour définir, dans la configuration d'extension minimum (C2), le long de la direction de mouvement (D1) des lamelles (1), un rabat défini par deux parties superposées (12, 13) de la tôle (9) au niveau d'une zone située en-dessous d'un siège ouvert (6) d'une première lamelle (1) et au-dessus de la paroi supérieure 2B d'une seconde lamelle (1), avec la première lamelle (1) positionnée au-dessus de la seconde lamelle (1).

3. Dispositif selon l'une quelconque des revendications précédentes, dans lequel la tôle (9) comporte une pluralité de lignes de pliage définissant des pointes et des creux.

4. Dispositif selon l'une quelconque des revendications précédentes, dans lequel les saillies (6A) comportent localement des zones déformées pour permettre à la cheville (7) et à la tôle (9) d'être retenues à l'intérieur du siège (6).

5. Dispositif selon l'une des revendications précédentes, dans lequel les lamelles (1) sont des lamelles rigides.

6. Dispositif selon l'une quelconque des revendications précédentes, dans lequel la paroi antérieure (2A) de chaque lamelle (1) comporte une partie inférieure inclinée (2C), conçue pour se mettre en contact avec la paroi antérieure (2A) d'une lamelle subséquente et inférieure (1).
